(19) **Europäisches Patentamt**

**European Patent Office**

**Office européen des brevets**

(11) Veröffentlichungsnummer : **0 275 253 B1**

(12) **EUROPÄISCHE PATENTSCHRIFT**

(45) Veröffentlichungstag der Patentschrift :
21.08.91 Patentblatt 91/34

(51) Int. Cl.⁵ : **H02K 1/18, H02K 5/24**

(21) Anmeldenummer : **86904782.9**

(22) Anmeldetag : **13.08.86**

(86) Internationale Anmeldenummer :
PCT/DE86/00326

(87) Internationale Veröffentlichungsnummer :
WO 87/03147 21.05.87 Gazette 87/11

(54) **VORRICHTUNG ZUR LAGERUNG DES STÄNDERS EINES DREHSTROMGENERATORS.**

(30) Priorität : 06.11.85 DE 3539298

(43) Veröffentlichungstag der Anmeldung :
27.07.88 Patentblatt 88/30

(45) Bekanntmachung des Hinweises auf die
Patenterteilung :
21.08.91 Patentblatt 91/34

(84) Benannte Vertragsstaaten :
DE FR GB

(56) Entgegenhaltungen :
DE-B- 2 817 532
DE-C- 608 371

(56) Entgegenhaltungen :
DE-C- 713 820
GB-A- 413 771
GB-A- 2 029 120
US-A- 1 801 124
US-A- 1 852 829
US-A- 2 154 146
US-A- 2 953 697
Patents Abstracts of Japan ,volume 1, Nr: 18,
24 March 1977, page 437e76 & JP, A , 51115612

(73) Patentinhaber : ROBERT BOSCH GMBH
Postfach 50
W-7000 Stuttgart 1 (DE)

(72) Erfinder : RAGALY, Istvan
Hermann-Essig-Strasse 102
W-7141 Schwieberdingen (DE)

## Beschreibung

### Stand der Technik

Die Erfindung geht aus von einer Vorrichtung nach dem Oberbegriff des Anspruchs 1 bzw. einer Vorrichtung nach dem Oberbegriff des Anspruchs 8.

Bei einer bekannten, den Oberbegriff des Anspruchs 1 bestimmenden dynamoelektrischen Maschine (US-A-1801124) ist zur Einhaltung eines präzise vorgegebenen Abstands zwischen den beiden äußeren Rotorlagerungen in den beidseitigen Lagerschilden ein hochgenau bemessener Hüllenring vorgesehen, der beidseitig in zugewandten Einpässen der Lagerschilde hart eingespannt ist, so daß dieser Abstand unabhängig wird von gegebenenfalls unterschiedlichen Lamellendicken des Statorpakets. Dieses Statorpaket ist dann seinerseits einseitig lose im durch den Hüllenring vervollständigten Gehäuse der dynamoelektrischen Maschine aufgehängt, und zwar dadurch, daß auf einer Seite des Statorpakets ein Spannring befestigt ist, der mit einem radial vorspringenden Außenflansch lediglich auf einer Seite mit dem Hüllenring im zugewandten Einpaß des dortigen Lagerschildes sitzt.

Damit die radialen Toleranzen des Statorpakets und des hart eingespannten Hüllenrings nicht genauer bearbeitet werden müssen, ist zwischen diesen beiden Komponenten ein Ringspalt vorgesehen, der aber nicht einer möglichen Geräuschdämmung dienen kann. Tatsächlich werden durch die umlaufend harte Einspannung des mit dem Statorpaket oder Ständerjoch vernieteten Spannrings Geräusche ungedämmt auf das Gehäuse übertragen.

Bei einer weiteren bekannten, den Oberbegriff des Anspruchs 8 bestimmenden elektrischen Maschine (DE-C-713820) wird der Ständer oder das Statorpaket der elektrischen Maschine dadurch mit dem umgebenden Gehäuse verbunden, daß es mittels einer Leichtmetallegierung in das Gehäuse eingegossen wird. Diese Leichtmetallegierung hat jedoch die Tendenz, später zu schrumpfen, so daß gegebenenfalls Risse entstehen können. Um diesen Schrumpfvorgang auffangen zu können, sind im Ständerpaket peripher umlaufend größere offene Axialkanäle vorgesehen, so daß ein äußerer, mit dem Ständerpaket aber einstückig bleibender Ring mit dem Ständer über schräge Zwischenstege verbunden bleibt. Diese Zwischenstege sind zwar nachgiebig, aber nur um ein gewisses Drehen des Ständers zu erlauben, wenn um den Ständer der Außenmantel gegossen wird und beim Erkalten des Gießmaterials auf den Ständer radiale Kräfte zur Einwirkung kommen.

Das gesamte Ständerpaket ist in üblicher Weise zwischen den beiden Gehäusehälften eingespannt, so daß hierdurch weder eine besondere Sitzzentrierung noch eine Geräuschminderung erzielt wird.

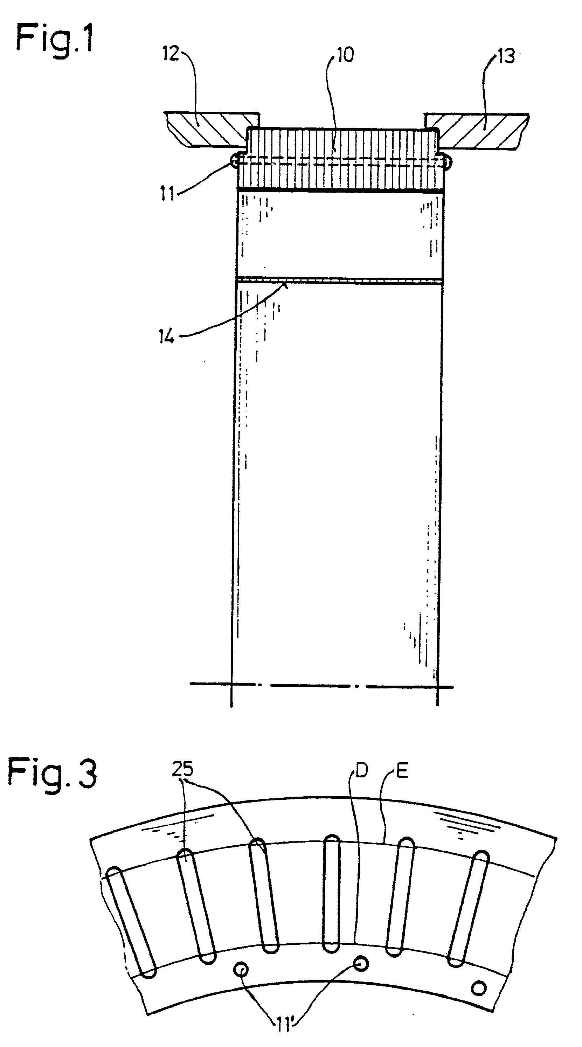

Zum besseren Verständnis vorliegender Erfindung wird im folgenden zunächst anhand der Darstellung der Fig. 1 auf eine bekannte, also zum Stand der Technik gehörende Ausführungsform eines Statorpakets in seiner Positionierung zwischen den beiden angrenzenden Gehäuseteilen eines Drehstromgenerators Bezug genommen. Die das Statorpaket oder den Ständer bildenden Lamellen sitzen jeweils in Paßbohrungen des ventilatorseitigen A-Lagerschilds 12 bzw. des schleifringseitigen B-Lagerschilds 13 fest eingespannt und gleichzeitig zentriert, wobei die einzelnen Ständerbleche 10 noch durch geeignete Nietverbindungen 11, beispielsweise über den Umfang des Ständerjochs verteilt, zusammengehalten sind. Bei einer solchen bekannten Ständerbefestigung ist nachteilig die schwingungstechnisch gesehen starre Kopplung des Ständers mit den angrenzenden Gehäuseringwänden, wodurch die für die Geräuschentwicklung bei einem Drehstromgenerator verantwortliche Abstrahlfläche eine entscheidende Vergrößerung erfährt und außerdem auch die eigenen Resonanzfrequenzen der Generatorteile (Ständer, Lagerschilde) unter Umständen in besonders störende Frequenzbereiche verlagert werden können. Ferner besteht bei dieser bekannten Ständerbefestigung zwischen den Lagerschilden 12 und 13 die Möglichkeit, daß durch die Montage der beiden Gehäuseteile eine Verformung des Ständers auftritt und die Ständerbohrung 14 gegebenenfalls unrund wird.

Es ist daher das in sich widersprüchliche Problem zu lösen, einerseits das Statorpaket oder den Ständer zwischen die beidseitigen Gehäuseteile insbesondere eines Drehstromgenerators fest einzuspannen und in der Weise fest fixiert und hochgenau zu lagern, daß eine einwandfreie, möglichst geringe Luftspaltbildung mit einwandfreier Zentrierung und Fluchtung der beiden Rotorwellenlagerungen übereinstimmt, daß andererseits aber soweit möglich verhindert wird, daß sich vom Ständerjoch hauptsächlich aufgrund magnetischer Induktion ausgehende Vibrationen als Körperschall auf das Gehäuse des Drehstromgenerators übertragen und entsprechende Vibrationen und Geräusche verursachen.

Der Erfindung liegt daher die Aufgabe zugrunde, eine Vorrichtung zur Lagerung des Ständers einer elektrischen Maschine insbesondere bei einem Drehstromgenerator für Kraftfahrzeuge u.dgl. zu schaffen, durch welche der Ständer bei geringster Geräuschentwicklung sicher und zentrisch im Gehäuse gehalten ist.

Zur Reduzierung der von einer dynamoelektrischen Maschine ausgehenden Geräusche ist es schon bekannt (US-A-2953697), auf der Oberfläche des Ständerjochs, also direkt an den Lamellen in vorgegebenen Winkelabständen erste Längsabstandsstangen anzubringen; insbesondere anzuschweißen. Über diese Abstandsstangen werden dann endseitig Radialringe geschoben und an die Stangen angeschweißt. Anschließend werden auf diese Radialringe gegenüber den ersten Abstandsstangen im Winkel versetzt zweite Abstandsstangen aufgelegt und wieder angeschweißt, die erst dann mit dem Gehäuse verbunden werden. Zusätzlich sind dann noch von der Gehäusewandung ausgehend stoßdämpferartige Vorsprünge in Richtung auf die beiden Radialringe vorspringend angeordnet. Eine solche Lagerung eines Ständerpakets setzt voraus, daß das Gehäuse aus einem einstückigen Zylinder und nicht aus zwei beidseitigen Lagerschilden besteht und schließt nicht aus, daß sich erhebliche Drehschwingungsprobleme ergeben, die zu Brüchen in der Ständerbefestigung führen können.

Eine weitere bekannte Lösung, bei einer dynamoelektrischen Maschine die Geräuschabstrahlung zu vermindern (US-A-1852829), besteht noch darin, zwischen das Gehäuse und den Stator eine Kunstharzschicht einzubringen.

Vorteile der Erfindung

Die erfindungsgemäße Vorrichtung löst die genannte Aufgabe mit den kennzeichnenden Merkmalen des Anspruchs 1 bzw. des Anspruchs 8 und hat den Vorteil, daß die zentrische Montage des Ständers im Gehäuse des Drehstromgenerators wesentlich erleichtert ist und eine Verformung der Ständerinnenbohrung weitgehend vermieden werden kann. Besonders vorteilhaft ist ferner, daß die Ständerschwingungen nicht direkt, sondern über Entkopplungsringe bzw. -sektoren auf das Generatorgehäuse übertragen werden, wodurch eine Reduzierung des vom Ständer und Gehäuse in radialer Richtung abgestrahlten Geräusches erzielt wird.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist bei einer ersten Ausführungsform, daß durch die Anordnung eines das Ständerjoch lagernden Entkopplungsrings Ständerflächen nach tuben vollkommen abgeschirmt sind, wobei darüber hinaus noch die zylindrische Ringfläche des Ständers gegenüber dem Entkopplungsring in einem vorgegebenen Abstand gehalten ist, der dämpfend wirkt und in welchem auch eine Dichtbzw. Dämpfungsmasse eingebracht sein kann, die die Dämpfungswirkung zusätzlich verstärkt.

Bei einem weiteren Ausführungsbeispiel der Erfindung sind ebenfalls, mindestens über vorgegebene Umfangswinkel, radiale bestände der Ständerjochaußenwandung gegenüber einem abschirmenden Entkopplungsring im Abstand gehalten, wobei schließlich dann auf den Entkopplungsring völlig verzichtet werden kann, wenn die das Ständerjoch bildenden Ständerlamellen in einer Weise vorbearbeitet, nämlich ausgestanzt werden, daß sich eine Entkopplungsringwirkung in Verbindung mit einer speziellen Gehäuseform, ergibt.

Zeichnung

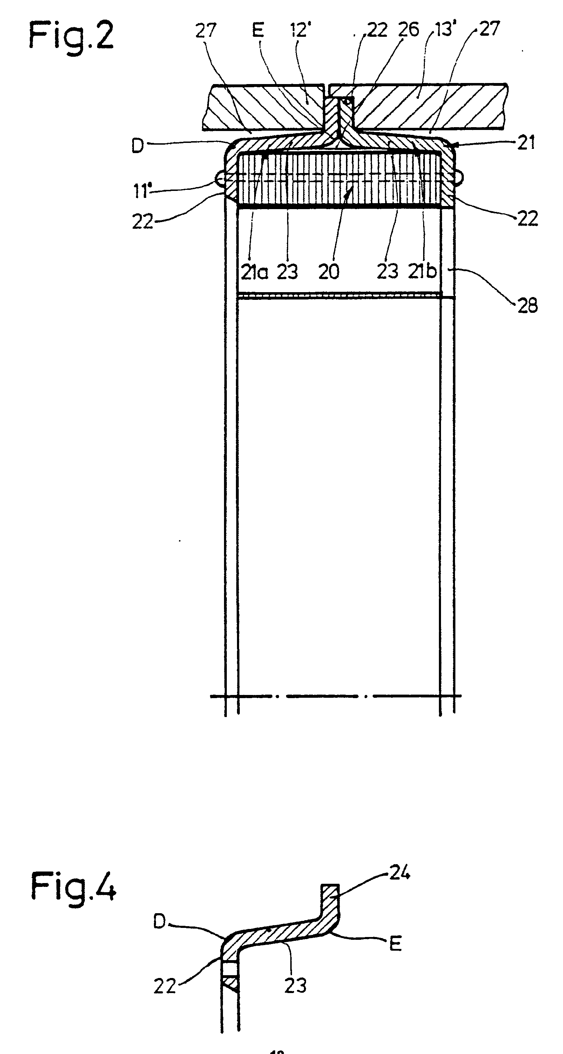

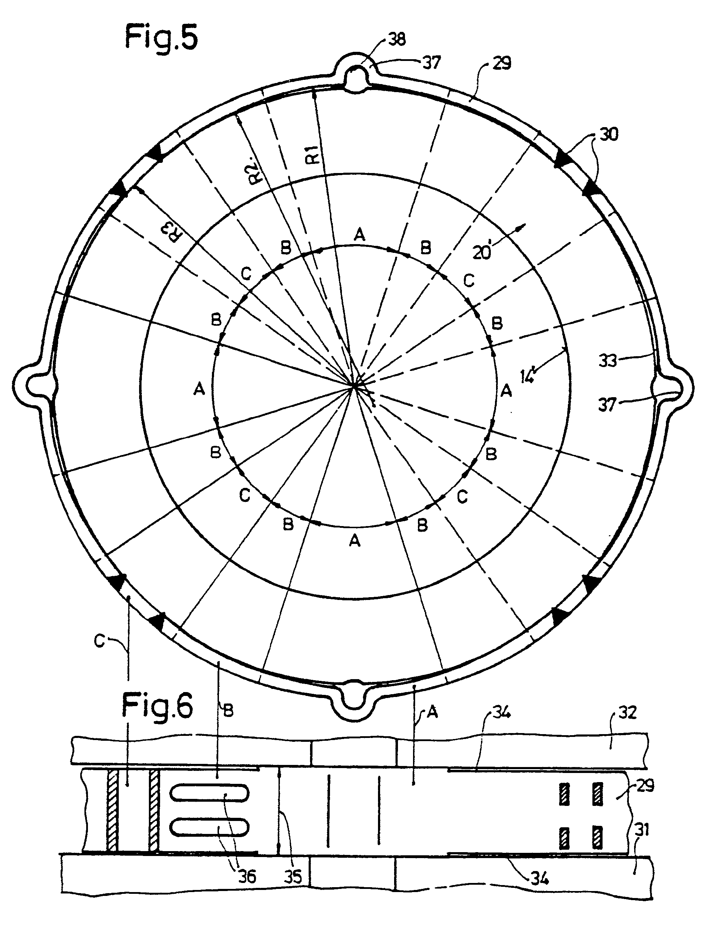

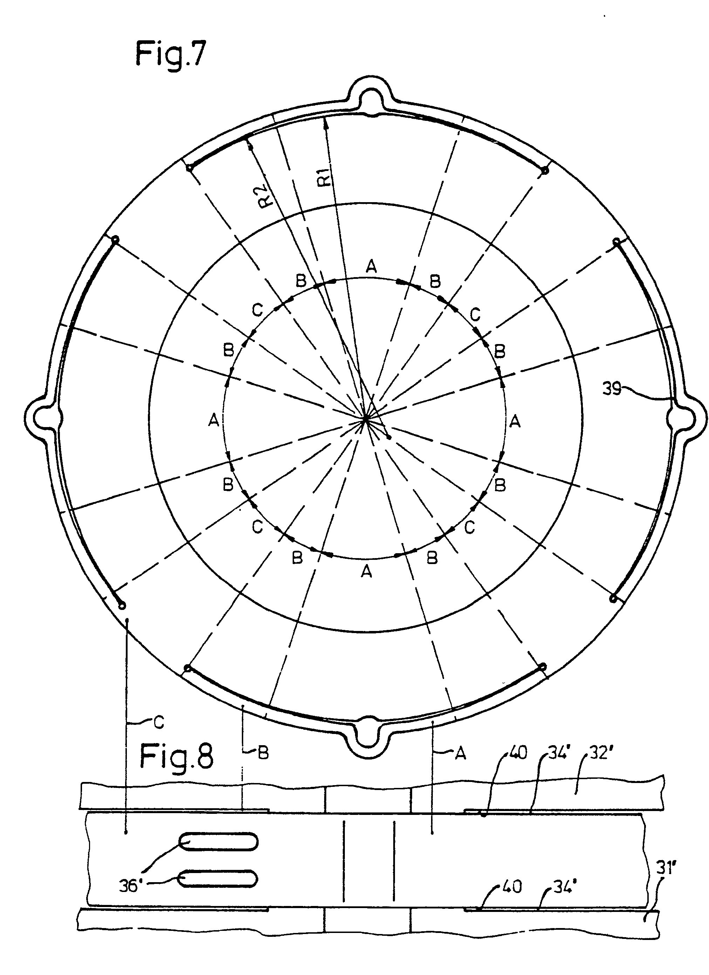

Ausführungsbeispiele der Erfindung sind in der Zeichnung dargestellt und werden in der nachfolgenden Beschreibung näher erläutert. Es zeigen Fig. 1 stark schematisiert im Schnitt eine herkömmliche Lagerungs- und Einspannmöglichkeit für das Ständerjoch zwischen dem beidseitig anschlagenden A-Lagerschild und dem B-Lagerschild des Gehäuses eines Drehstromgenerators, Fig. 2 ein erstes Ausführungsbeispiel der Erfindung, schematisiert im Schnitt, bei welchem das Ständerpaket von einem zu einer Ringschale zusammengesetzten Entkopplungsring gelagert ist, Fig. 3 die Grundform des Entkopplungsrings vor der Biegeformung und Fig. 4 die Schnittstruktur eines Entkopplungsteilrings im verformten Zustand, während die Fig. 5 ein weiteres Ausführungsbeispiel für die Ständerlagerung mittels eines in Winkelsektoren unterteilten radialen Entkopplungsrings darstellt, und Fig. 6 die Abwicklung oder Draufsicht auf den radialen Entkopplungsring mit beidseitig angedeuteten Gehäusewänden in Ansicht von unten oder Draufsicht ; die Fig. 7 und 8 zeigen schließlich eine weitere Ausgestaltung des in den Fig. 2 und 6 gezeigten Lösungsprinzips, bei der der radiale Entkopplungsring unmittelbar durch entsprechend ausgestanzte und vorbearbeitete Ständerlamellen selbst gebildet ist.

Beschreibung der Ausführungsbeispiele

Auf die in Fig. 1 gezeigte bekannte Einspannung des Ständerjochs zwischen zwei angrenzenden A- und B-Lagerschildern 12 und 13 eines Drehstromgenerators braucht nicht weiter eingegangen zu werden ; das Ständerjoch ist aus einzelnen Eisenlamellen in entsprechender Formung gebildet und sitzt in der durch eine Nietverbindung 11 zusammengehaltenen Ständerpaketform in jeweils einem geeigneten Einpaß der beidseitig anliegenden Gehäuseteile.

Bei der ersten, in Fig. 2 gezeigten Ausführungsform einer erfindungsgemäßen Vorrichtung zur Ständerlagerung ist das Ständerjoch 20 dadurch an und innerhalb des Drehstromgeneratorgehäuses gehalten, daß zwischen den beidseitig angrenzenden Gehäuseteilen 12' und 13', die wieder von einem A-Lagerschild und einem B-Lagerschild gebildet sein können, und dem Ständerjoch 20 eine Lageroder Entkopplungsringstruktur 21 angeordnet ist., die einerseits am Ständerjoch in geeigneter Weise befestigt und andererseits zentrisch, beispielsweise durch Einsetzen in eine Paßbohrung 22 des Lagerschilds 13', im Gehäuse des Drehstromgenerators gehalten ist. Die lagernde Entkopplungsringstruktur, die im folgenden als Entkopplingsring bezeichnet wird, ist gebildet aus zwei Entkopplungshalbringen, die jeweils für sich halbschalenförmig ausgenildet sind und eine etwa flach gelegte S-Form aufweisen, wie die Querschnittdarstellung der Fig. 4 zeigt.

Der aus den beiden halbschalenförmigen Entkopplungsteilringen 21a, 21b gebildete Entkopplungsring 21 umgibt daher das Ständerjoch 20 radial von außen umlaufend und umfaßt dieses auch seitlich, nämlich mit den beiden seitlich heruntergezogenen Schenkeln 22 mindestens noch soweit an den axialen Außenringflächen, daß eine sichere Befestigung am gesamten Ständerpaket, bevorzugt durch durch das Ständerpaket und die angrenzenden Schenkel der Entkopplungsteilringe 21a, 21b geführte Nietverbindungen 11', möglich ist.

Der Darstellung der Fig. 2 kann deutlich entnommen werden, daß die beiden aufeinander zu gerichteten Schenkel oder besser Teilringflächen 23 jedes Entkopplungsteilrings in einem allerdings vergleichsweise sehr spitzen Winkel zur Außenringfläche des Ständerjochs 20 verlaufen, derart, daß in Ständermitte etwa ein Abstand zwischen 0,05 mm bis 0,1 mm, gegebenenfalls auch größer, entsteht. Durch diesen Abstand wird schon für sich gesehen eine wirksame Entkopplung des sicher durch die Einspannung des Entkopplungsrings 21 über seinen gesamten Umfang von den beidseitigen Gehäuseteilen des Drehstromgenerators gehaltenen Ständers erreicht, wobei die Einspannung und Befestigung des Entkopplungsrings 21 an den beidseitigen Gehäuseteilen so erfolgt, daß von den im wesentlichen axial verlaufenden Ringflächen oder Teilschenkeln 23 ein hochgezogener Ringflansch 24 von jedem Entkopplungsteilring 21a, 21b ausgeht, die in der Paßbohrung 22 zusammengepreßt von den beiden Gehäuseteilen gehalten sind. Diese beiden Ringflansche 24, die in der Schnittdarstellung der Fig. 4 als nach oben verlaufender Teilschenkel dargestellt sind, zentrieren gleichzeitig durch ihre Einspannung in weiter unten noch zu beschreibender Weise das Ständerpaket.

Jeder Entkopplungsteilring kann dabei ununterbrochen vollflächig ausgebildet sein oder kann ausgestanzte, dann in axialer Richtung verlaufende Längsöffnungen aufweisen, die in der Darstellung der Fig. 3 mit 25 bezeichnet sind. Die Fig. 3 zeigt eine Vorform oder den Rohling für die Herstellung jedes Entkopplungsteilrings vor dem Biege- bzw. Verformungsvorgang, wobei die jeweiligen Biegekanten in Fig. 3 mit D und E gekennzeichnet sind. In Fig. 3 erkennt man auch die Bohrungen für die Herstellung der Nietverbindungen 11'.

Durch Materialauswahl, Dicke und Anzahl und Verhältnis der Breite der ausgestanzten Längsöffnungen sowie der Entkopplungsteilringe geling es weitgehend, im Bereich des Ständers eine Entkopplung zu erreichen. Dabei erzielt man durch die schwach spitzwinklig, also mit geringer Neigung verlaufenden Ringflächen 23 sowohl zur Außenringfläche des innenliegenden Ständerjochs einen in diesem Falle inneren Hohlraum 26 als auch beidseitige Abstandräume 27 zu den Gehäusewandungen, wodurch sich eine sichere Schüttelfestigkeit ergibt. Die ausgestanzten Längsnuten 25 wirken als zusätzliche Querschnittsvergrößerung für die Belüftung.

Um eine einwandfreie und insofern auch vereinfachte Zentrierung der Ständerbohrung zu erzielen, kann in Verbindung mit der Lagerung des Ständers über die Entkopplungsteilringe so vorgegangen werden, daß diese zunächst nach eigener Formung, also Anbiegen in die gewünschte Struktur der Fig. 4 und Befestigen (Annieten) an dem Ständer dadurch im Außenumfang hochgenau zentrisch ausgestanzt werden, daß die Ständerbohrung über einen Dorn zentriert und dann die Außendurchmesser der Entkopplungsteilringe 21a, 21b exakt und vor allen Dingen zentrisch ausgestanzt werden. Anschließend erfolgt der Einbau des Entkopplungsrings mit strammem Schiebesitz in die zentrisch gelegene Gehäusepaßbohrung 22, -und man erkennt, daß durch diese Montage der zwei Gehäuseteile 12', 13' der Ständer nicht mehr verformt werden kann, da die Montage ausschließlich an den Außenringflanschen 24 des Entkopplungsringes 21 angreift und diesen einspannt und nicht mehr auf den Ständer selbst einwirkt. Hierdurch bleibt auch die runde Ständerbohrung gesichert; eine Bearbeitung der Auflageflächen der Entkopplungsteilringe für die Gehäusebefestigung kann entfallen.

Eine vorteilhafte Ausgestaltung dieser Ausführungsform der Ständerpaketlagerung über einen Entkopplungsring besteht schließlich noch darin, daß für die beidseitigen Entkopplungsteilringe jeweils die Endlamellen des Ständerjochs herangezogen und entsprechend ausgestaltet werden — in der Darstellung der Fig. 2 ist dies bei der in der Zeichenebene rechten Lamelle 28 gezeigt, die in Doppelfunktion gleichzeitig in ihrem oberen Verlauf in die weiter vorn schon geschilderte Struktur eines Entkopplungsteilringes übergeht. Hierdurch ergibt sich eine entsprechende Gewichtseinsparung.

Bei einem weiteren Ausführungsbeispiel vorliegender Erfindung, welches in den Fig. 5 und 6 sowie modifiziert in den Fig. 7 und 8 dargestellt ist, ist der Entkopplungsring ein auf der Außenringfläche des Ständerjochs 20' aufliegender Radialring 29, der also auf dem ringförmigen Ständerjoch so aufliegt wie der Laufstreifen eines Rades oder ein Faßring. Die Ständerbohrung ist mit 14' bezeichnet, und die Befestigung des Radialrings 29 an der Außenfläche des Ständerjochs 20' erfolgt, und dies ist ein wesentliches Merkmal vorliegender Ausführungsform, nicht über den gesamten Umfang, sondern nur in bestimmten vorgegebenen Sektoren, die in der Darstellung der Fig. 5 mit C jeweils bezeichnet sind. An diesen Stellen ist der jeweilige Segmentbereich, der im folgenden als Festsegment C bezeichnet wird, mit dem Ständerjoch, und zwar innerhalb des von dem zum Festsegment C gehörenden Öffnungswinkel überdeckten Bereich, starr verbunden, etwa durch geeignete Schweißnähte oder Punktschweißen, wie bei 30 angedeutet.

In alternierender Reihenfolge ist der Radialring 29 in weitere Segmente aufgeteilt, nämlich in beidseitig zu jedem Festsegment C angeordnete sog. Übergangs- oder Kopplungssegmente B, in die die Festsegmentbereiche C natürlich einstückig übergehen und an welche sich dann beidseitig im folgenden als Spannsegmente A bezeichnete Segmente mit vorzugsweise größerer Winkelöffnung anschließen, die der Einspannung und zentrisch festen Betestigung des Ständerjochs 20' an den beidseitigen Gehäuseteilen des A-Lagerschilds 31 bzw. des B-Lagerschilds 32 dienen. Die Aufteilung der Segmente oder Sektoren über den Umfang des Radialringes 29 ist so getroffen, daß bei dem Ausführungsbeispiel der Fig. 5 beispielsweise vier im gleichmäßigen Winkel im Abstand zueinander angeordnete Spannsegmente A und sich beidseitig zu jedem Spannsegment anschließende Kopplungssegmente B befinden, die dann wieder in jeweils ein Befestigungssegment C übergehen. Zu dieser Aufteilung in Sektoren oder Segmente gehört noch ein weiteres Merkmal, welches darin besteht, daß jeweils im Bogenverlauf von einem Befestigungssegment C zum anderen Befestigungssegment ein sich bis zur Mitte des jeweiligen Spannsegmentes A erweiternder und dann wieder verringernder Schlitzabstand 33 zur Ständeraußenfläche ergibt so daß sich drei verschiedene Radien R1, R2 und R3 bilden, wobei der Radius R 3 der kleinste Radius ist und dem Außenradius des Ständerjochs entspricht, während der Radius R2 der Übergangsradius für das Kopplungssegment B ist und der Radius R1 den größten Abstand des Radialrings 29 zu der Außenfläche des Ständerjochs angibt. Dieser Abstand kann wieder zwischen 0,1 mm und 0,05 mm liegen und ergibt sich je nach Bemessung, auch aufgrund empirisch gewonnener Abstrahlungs- und Geräuschdaten.

Die Befestigung eines mit einem solchen Radialring 29 versehenen Ständerjochs 20' an den beidseitigen Lagerschilden des Drehstromgeneratorgehäuses erfolgt dann dadurch, daß als ergänzendes Merkmal der Bereich des jeweiligen Spannsegments A in der Breite, also in der axialen Längserstreckung, gesehen mit Bezug auf den Drehstromgenerator insgesamt, um einen vorgegebenen, auch nur geringen beidseitigen Abstand 34 länger ist als die angrenzenden und weiterführenden Segmente B und C, so daß es möglich ist, jeweils im Spannsegment A die Einheit aus Radialring 29 und Ständerjoch 20' hart in den beidseitigen Lagerschildern 31 und 32 einzuspannen. (s. Fig. 6), während in den Koppnlungssegmentbereichen B und den Befestigungssegmenten C das Gehäuse mit seinen beidseitigen Lagerschildern 31 und 32 nicht aufliegt. Hierdurch ergibt sich ein gewisser Entkopplungsgrad zwischen dem Ständer und dem Gehäuse, der hauptsächlich bestimmt ist durch die Steifigkeit des Radialringmaterials zwischen den beiden Segmenten A und C jeweils, anbei das Segment A fest mit dem Gehäuse und das Segment C fest mit dem Ständer verbunden ist. Auch hier läßt sich der Entkopplungsgrad durch Material und Dicke sowie Beschaffenheit des Radialrings einschließlich Anbringen eventueller Ausstanzöffnungen 36 bestimmen. In der Darstellung der Fig. 6 ist die wirksame axiale Länge der Spannsegmente C mit 35 bezeichnet.

Eine solche Ausbildung eines Entkopplungsrings in Form einer radialen Ringform verhindert größere Auslenkungsamplituden des Ständers (< 0,1 mm) in radialer Richtung durch die Wirkung der Gehäusesteifigkeit. In Fig. 5 sind schließlich noch über den Umfang des Radialrings 29 verteilt Ausbauchungen 37 gezeigt, die jeweils Durchtrittsöffnungen 38 bilden im Bereich der Spannsegmente A. Hierdurch können Spannelemente geeigneter Art, die die beiden Gehäuselagerschilder 31 und 32 miteinander verbinden, durchgeführt werden, die dann gleichzeitig auch das Spannsegment A jeweils hart einspannen. Auch durch ein solches Montageprinzip ergibt sich zusätzlich zu der Erzielung einer entsprechenden Geräuschminderung durch das beibehaltene Entkopplungsprinzip eine Erleichterung der zentrischen Montage des Ständers, insbesondere da beim Zusammenspannen auch hier die Ständerbohrung nicht unrund gespannt werden kann, denn die Spannmittel greifen lediglich an den Spannsegmenten A an, sichern aber eine einwandfreie Zentrierung der Ständerbohrung mit Bezug auf die beidseitigen Lagerschilde, die bekannterweise die Wälzlager für die Rotorwelle aufnehmen.

Schließlich ist noch bei dem Ausführungsbeispiel der Fig. 5 und 6 die Möglichkeit gegeben, daß die Ständerpaketlamellen selbst die Aufgabe der Entkopplungsringstruktur übernehmen, wie dies in den Fig. 7 und 8 dargestellt ist.

Bei dieser Ausführungsform sind sämtliche, das Ständerjoch bildenden Lamellen über den Außenumfang so ausgestanzt und ausgebildet, wie dies die Fig. 7 in Draufsicht zeigt — d.h. gleichmäßig über den Umfang verteilt, bei dem Ausführungsbeispiel viermal, sind Schlitze 39 in den Ständerlamellen angeordnet, die im wesentlichen genau die Abstandsbildung nachbilden, wie sie die Radialringstruktur in Fig. 5 darstellt ; auch auf diese Art ergeben sich Befestigungssegmente C über den Umfang, die in diesem Fall allerdings mit den Lamellen des Ständers einstückig sind und wobei nur in den Schlitzbereichen die Radialringstruktur erkennbar gebildet ist ; an die Befestigungssegmente schließen sich dann Übergangs- oder Kopplungssegmente B jeweils beiseitig an, die in die Spannsegmente A mit größerem Öffnungswinkel übergehen.

Um hier sicherzustellen, daß effektiv nur über den Bereich der Spannsegmente B hart eingespannt wird, wird vorzugsweise so vorgegangen, daß nicht an der Struktur des Ständerjochs in der axialen Länge geändert wird, was unpraktisch wäre, sondern die erwünschte Abstandsbildung 34' zu den freien Ständersegmenten B und C wird durch entsprechende Gehäuseausnehmungen 40 erreicht, die sich an den Gehäusebereich jeweils anschließen, der der Einspannung des Spannsegments A dient. Auch hier können durch entsprechende Aussparungen Schlitzöffnungen 36' in der von dem äußeren Flächenbereich der Lamellen selbst gebildeten Entkopplungsringstruktur angeordnet werden, die in Umfangsrichtung verlaufen.

Schließlich ist es entsprechend einer Ausgestaltung vorliegender Erfindung möglich, in sämtliche durch den Abstand der jeweiligen Entkopplungsringstruktur zum Ständerjoch gebildeten inneren Hohlräume oder Bereiche, also bei dem Ausführungsbeispiel der Fig. 2 im Raum 26 zwischen Entkopplungsring und Ständerjoch bzw. zwischen Kopplungssegment B und Spannsegment A und der Ständerjochfläche (Raum 33) und/oder zwischen Befestigungssegment oder Festsegment C und Kopplungssegment B und dem Gehäuse eine geeignete Dicht- bzw. Dämpfungsmasse aufzubringen oder einzubringen, was durch Eingießen, Pressen, Einfügen, Einspannen u.dgl. geschehen kann. Diese Masse gewährleistet weiterhin die Entkopplung des Ständerpakets vom Gehäuse, schützt mit Vorzug gegen Korrosion und dient als Dämpfungselement für Schwingungen großer Amplitude. Als Material für die Dichtund Dämpfungsmasse kommt beispielsweise Silikongummi, Viton oder ein ähnliches geeignetes (Kunststoff-)Material in Frage.

## Patentansprüche

1. Vorrichtung zur Lagerung des Ständers (20) einer elektrischen Maschine, insbesondere eines Drehstromgenerators für Fahrzeuge und dgl., wobei der Ständer (20) beidseitig von Gehäuseteilen (12', 13') (A-Lagerschild, B-Lagerschild) aufgenommen ist und einen radialen Abstand zwischen dem Ständerpaket (20) und den beidseitigen Gehäuseteilen (12', 13') bildende Entkopplungsstrukturen (21) vorgesehen sind, dadurch gekennzeichnet, daß zur Geräuschdämpfung und Sitzzentrierung ein aus zwei halbschalenförmigen Entkopplungsteilringen (21a, 21b) gebildeter Entkopplungsring (21) vorgesehen ist, dessen Entkopplungsteilringe das Ständerpaket mit seitlichen Ringflanschen (Schenkelteile 22) beidseitig umfassen und in einen gemeinsamen, radial abstehenden Vertikalflansch (24) übergehen, der mindestens auf einer Seite in eine Paßbohrung (22) der ihn beidseitig einspannenden Gehäuseteile (A-Lagerschild 12', B-Lagerschild 13') eingesetzt ist.

2. Vorrichtung nach Anspruch 1, dadurch gekennzeichnet, daß die seitlichen Ringflansche (Schenkelteile 22) der beiden halbschalenförmigen Entkopplungsteilringe (21a, 21b) jeweils in eine axial verlaufende Halbringfläche (23) übergehen, die unter Einhaltung eines radialen Abstands zur Ständerpaketoberfläche aufeinander zulaufen und mit einem nach oben abgebogene Endteil den gemeinsamen Vertikalflansch (24) bilden.

3. Vorrichtung nach Anspruch 1 oder 2, dadurch gekennzeichnet, daß die Übergangsringflächen (23) der beidseitigen Entkopplungsteilringe (21a, 21b) sowohl zur Außenringfläche des Ständerpakets als auch zu den angrenzenden Innenringflächen der beidseitigen, die Gehäuseteile bildenden A- und B-Lagerschilde (12', 13') einen spitzen Winkel einschließen.

4. Vorrichtung nach einem der Ansprüche 1-3, dadurch gekennzeichnet, daß die das Ständerpaket (Ständerjoch 20) beidseitig seitlich umfassenden, von den halbschalenförmigen Entkopplungsteilringen (21a, 21b) gebildeten, heruntergezogenen Ringflansche (22) mit dem Ständerjoch (20) durch über den Umfang verteilte Nietverbindungen (11') verbunden sind.

5. Vorrichtung nach Anspruch 3 oder 4, dadurch gekennzeichnet, daß der Entkopplungsring (21) aus den beiden Entkopplungsteilringen dadurch exakt zentrisch bemessen ist, daß nach Befestigung der Entkopplungsteilringe (21a, 21b) am Ständerjoch dieses mit der Ständerbohrung auf einen Dorn aufgesetzt und die beiden zusammengeführten Vertikalflansche (24), die gleichzeitig der Einspannung der Gehäusepaßbohrung (22) dienen, exakt zentrisch ausgestanzt sind.

6. Vorrichtung nach einem der Ansprüche 3-5, dadurch gekennzeichnet, daß in den zylindrischen, in axialer Richtung verlaufenden Teilflächen des Entkopplungsrings (21) (ausgestanzte) Längsöffnungen (25) angeordnet sind, deren Materialdicke, Zahl und Verhältnis zur Breite der verbleibenden Teile das Entkopplungsausmaß des Ständers im wesentlichen bestimmt.

7. Vorrichtung nach einem der Ansprüche 1-6, dadurch gekennzeichnet, daß mindestens einer der beiden, insgesamt den Entkopplungsring (21) bildenden Entkopplungsteilringe (21a, 21b) durch entsprechende Formgebung der jeweiligen Endlamelle (28) des Ständerpakets gebildet ist.

8. Vorrichtung zur Lagerung des Ständers (20') einer elektrischen Maschine, insbesondere eines Drehstromgenerators für Fahrzeuge und dgl., wobei der Ständer (20') beidseitig von Gehäuseteilen (A-Lagerschild 31, B-Lagerschild 32) aufgenommen ist und lediglich über einen vorgegebenen Umfangswinkel einen radialen bestand (33) zwischen dem Ständerpaket (20') und den beidseitigen Gehäuseteilen (31, 32) bildende Entkopplungsstrukturen (20) vorgesehen sind, dadurch gekennzeichnet, daß zur Geräuschminderung und Sitzzentrierung die Entkopplungsstrukturen aus einem über den Außenumfang des Ständerpakets (Ständerjoch 20') gelegten Radialring (29) bestehen, der mit über den Umfang verteilten Befestigungssegmente (C) fest mit der äußeren Ringoberfläche des Ständerjochs (20') verbunden und an zwischenliegenden, Kopplungssegmente (B) und Spannsegmente (A) bildenden Übergangsbereichen im Abstand zur Oberfläche des Ständerjochs (20') verlaufend angeordnet ist, wobei die Spannsegmente (A) der harten Einspannung in beidseitig anliegenden Stirnflächen der Gehäuseteile (A-Lagerschild 31 ; B-Lagerschild 32) dienen.

9. Vorrichtung nach Anspruch 8, dadurch gekennzeichnet, daß sich beidseitig von Spannsegmenten (A) im Radialring (29) ebenfalls im Abstand zur Ständerjochoberfläche verlaufende Kopplungssegmente (B) anschließen, die an die mit der Ständerjochoberfläche fest verbundenen Befestigungssegmente (C) übergehen.

10. Vorrichtung nach Anspruch 8 oder 9, dadurch gekennzeichnet, daß Spann-, Kopplungs- und Befestigungssegmente (A, B, C) des Radialrings (29) in gleichmäßiger Abfolge über den Umfang des Ständerjochs (20') verteilt sind.

11. Vorrichtung nach Anspruch 10, dadurch gekennzeichnet, daß der Radialring (29) mindestens drei, im annähernd gleichmäßigen bestand über den Umfang des Ständerjochs verteilte Befestigungssegmente (C) aufweist, die mit der Oberfläche des Ständerpakets durch Schweißen, Punktschweißen oder Nieten o.dgl. verbunden sind, und daß die Spannsegmente (A), die sich über einen größeren Umfangswinkel öffnen, gegenüber der Eisenlänge des Ständerpakets eine größere Einspannlänge (35) aufweisen, derart, daß das Ständerjoch (20') durch die beidseitig einspannenden A- und B-Lagerschilde (31, 32) des Drehstromgeneratorgehäuses lediglich über die Spannsegmente (A) gehalten ist.

12. Vorrichtung nach Anspruch 11, dadurch gekennzeichnet, daß die Spannsegmente (A) radial nach außen gerichtete Ausbauchungen (37) aufweisen mit Durchtrittsöffnungen (38) für Spannmittel (Spannbolzen, Spannschrauben) für die beidseitig anliegenden Gehäuseschilde.

13. Vorrichtung nach einem der Ansprüche 8-12, dadurch gekennzeichnet, daß der Radialring (29) mit seinen abwechselnden Spann-, Kopplungs- und Befestigungssegmenten (A, B, C) von Schlitzbildungen (39) im umfangnahen Bereich der ständereigenen Lamellen selbst gebildet ist, wobei die Befestigungssegmente (C) einstückig mit den angrenzenden Ständereisenlamellen ausgebildet sind und die Einspannung nur im Bereich der Spannsegmente (A) durch die beidseitigen Gehäuselagerschilder (31', 32') mittels beidseitiger Ausnehmungen (40) des Gehäuses jeweils angrenzend zu jedem Spannsegment (A) erreicht wird.

14. Vorrichtung nach einem der Ansprüche 1-14, dadurch gekennzeichnet, daß in die zwischen den jeweiligen Entkopplungsringen und dem Ständerjoch bzw. den Gehäuseteilen gebildeten Abstände, Hohlräume und Ringflächen (26, 33, 39, 40, 27) eine Dicht- oder Dämpfungsmasse (Silikongummi, Viton) eingebracht ist.

## Claims

1. Device for bearing the stator (20) of an electric machine, in particular of a three-phase alternator for vehicles and the like, the stator (20) being housed on both sides by frame parts (12', 13') (A end-shield, B end-shield), and a radial spacing being provided between the stator core (20) and the frame parts (12', 13') on both sides forming decoupling structures (21) (sic), characterised in that for the purpose of noise deadening and centring of the seat a decoupling ring (21) is provided, formed from two decoupling partial rings (21a, 21b) in the form of a half sleeve, whose decoupling partial rings embrace the stator core on both sides by means of lateral ring flanges (limb parts 22) and merge into a common, radially projecting vertical flange (21), which is inserted at least on one side into a matching hole (22) of the frame parts (A end-shield 12', B end-shield 13') clamping it on both sides.

2. Device according to Claim 1, characterised in that the lateral ring flanges (limb parts 22) of the two decoupling partial rings (21a, 21b) in the form of a half sleeve respectively merge into an axially extending halfring surface (23), which while preserving a radial distance from the stator core surface run into one another and form the common vertical flange (24) by means of an upwardly bent end part.

3. Device according to Claim 1 or 2, characterised in that the transitional ring surfaces (23) of the decoupling partial rings (21a, 21b) on both sides enclose an acute angle both with respect to the outer ring surface of the stator core and to the adjoining inner ring surfaces of the A and B end-shields (12', 13') forming the frame parts on both sides.

4. Device according to one of Claims 1-3, characterised in that the drawn-down ring flanges (22), which laterally embrace the stator core (stator yoke 20) on both sides and are formed by the decoupling partial rings (21a, 21b) in the form of a half sleeve, are connected to the stator yoke (20) by rivetted joints (11') distributed over the circumference.

5. Device according to Claim 3 or 4, characterised in that the decoupling ring (21) made from the two decoupling partial rings is exactly centrally dimensioned due to the fact that after mounting of the decoupling partial rings (21a, 21b) on the stator yoke the latter is placed with the stator bore on a mandrel, and the two vertical flanges (24) brought together, which simultaneously serve the clamping of the frame matching hole (22), are stamped-out exactly centrally.

6. Device according to one of Claims 3-5, characterised in that there are arranged in the cylindrical partial surfaces, extending in the axial direction, of the decoupling ring (21) (stamped-out) longitudinal openings (25), whose material thickness, number and relationship to the width of the remaining parts essentially determines (sic) the decoupling extent of the stator.

7. Device according to one of Claims 1-6, characterised in that at least one of the two decoupling partial rings (21a, 21b), which together form the decoupling ring (21), is formed by corresponding shaping of the respective end segment (28) of the stator core.

8. Device for bearing the stator (20') of an electric machine, in particular of a three-phase alternator for vehicles and the like, the stator (20') being housed on both sides by frame parts (A end-shield 31, B end-shield 32), and a radial spacing (33) being provided only over a prescribed circumferential angle between the stator core (20') and the frame parts (31, 32) on both sides forming decoupling structures (20) (sic), characterised in that for the purpose of noise deadening and centring of the seat the decoupling structures consist of a radial ring (29), which is laid over the outer circumference of the stator core (stator yoke 20'), is rigidly connected by means of mounting segments (C) distributed over the circumference to the outer ring surface of the stator yoke (20'), and is arranged at a distance from the surface of the stator yoke (20') extending on intermediate transitional regions forming coupling segments (B) and clamping segments (A), the clamping segments (A) serving the rigid clamping in end faces, adjacent on both sides, of the frame parts (A end-shield 31 ; B end-shield 32).

9. Device according to Claim 8, characterised in that clamping segments (A) are adjoined on both sides of the radial ring (29) by coupling segments (B), which likewise extend at a spacing from the stator yoke surface and merge into the mounting segments (C) rigidly connected to the stator yoke surface.

10. Device according to Claim 8 or 9, characterised in that the clamping, coupling and mounting segments (A, B, C) of the radial ring (29) are distributed in a uniform sequence over the circumference of the stator yoke (20').

11. Device according to Claim 10, characterised in that the radial ring (29) has at least three mounting segments (C), which are distributed in an approximately uniform spacing over the circumference of the stator yoke and are connected to the surface of the stator core by welding, spot welding or rivetting or the like, and in that the clamping segments (A), which open over a larger circumferential angle, have a clamping length (35) which is larger with respect to the core length of the stator core in such a way that the stator yoke (20') is held by the A and B end-shields (31, 32), clamping on both sides, of the three-phase alternator frame only over the clamping segments (A).

12. Device according to Claim 11, characterised in that the clamping segments (A) have radially outwardly directed bulges (37) with through-openings (38) for clamping means (clamp bolts, clamping screws) for the frame shields adjacent on both sides.

13. Device according to one of Claims 8-12, characterised in that the radial ring (29) with its alternating clamping, coupling and mounting segments (A, B, C) is formed by slot formations (39) in the circumferentially near region of the very serpents belonging to the stator, the mounting segments (C) being constructed in one piece with the adjoining stator iron segments, and clamping being achieved only in the region of the clamping segments (A) through the frame end-shields (31', 32') on both sides by means of recesses (40) on both sides of the frame respectively adjoining each clamping segment (A).

14. Device according to one of Claims 1-14, characterised in that a sealing compound or deadening compound (silicone rubber, Viton) is introduced into the spacings, cavities and ring surfaces (26, 33, 39, 40, 27) formed between the respective decoupling rings and the stator yoke or the frame parts.

## Revendications

1. Dispositif de fixation du stator (20) d'une machine électrique notamment d'un alternateur à courant triphasé pour des véhicules ou analogues, le stator (20) étant enserré sur ses deux faces par des parties de boîtier (12', 13') (panneau de palier A, panneau de palier B) et laissant une distance radiale entre le paquet (20) formant le stator et les parties de boîtier (12', 13') sur les deux faces pour former des structures de découplage (21), dispositif caractérisé en ce que pour amortir le bruit et centrer le positionnement, il est prévu un anneau de découplage (21) formé de deux parties d'anneau de découplage (21a, 21b) en forme de demi-coquilles, anneau dont les parties de découplage entourent de part et d'autre le paquet formant le stator, par leurs brides annulaires latérales (parties formant les branches 22) et se transformant en une bride verticale (24) commune, radialement en saillie, qui est logée au moins d'un côté dans un perçage ajusté (22) des deux parties de boîtier (flasque de palier A, 12', panneau de palier B, 13') l'enserrant des deux côtés.

2. Dispositif selon la revendication 1, caractérisé en ce que les brides annulaires latérales (parties de branche 22) des deux parties d'anneau de découplage (21a, 21b) en forme de demi-coquilles, se transforment respectivement en une demi-surface annulaire (23) dirigée axialement, et qui en conservant une distance radiale par rapport à la surface du paquet formant le stator se rejoignent et constituent la bride verticale (24) commune avec la partie d'extrémité recourbée vers le haut.

3. Dispositif selon la revendication 1 ou 2, caractérisé en ce que les surfaces annulaires de transition (23) des deux parties d'anneau de découplage (21a, 21b) des deux côtés, font un angle aigu par rapport à la surface annulaire extérieure du paquet du stator et par rapport aux surfaces annulaires intérieures adjacentes des panneaux de palier (A et B) (12', 13') qui constituent sur les deux côtés les parties de boîtier.

4. Dispositif selon l'une des revendications 1 à 3, caractérisé en ce que les parties d'anneau de découplage (21a, 21b) en forme de demi-coquilles qui entourent latéralement des deux côtés le paquet du stator (culasse de stator 20) sont reliées par une bride annulaire descendante (22) à la culasse de stator (20) par des liaisons à rivet (11') réparties à la périphérie.

5. Dispositif selon la revendication 3 ou 4, caractérisé en ce que l'anneau de découplage (21) est dimensionné exactement de manière centrée à partir des deux parties d'anneau de découplage pour qu'après fixation de ces parties d'anneau (21a, 21b) sur la culasse de stator, celles-ci soient mises en place sur une broche par l'alésage du stator et que les deux brides verticales (24) réunies, qui servent en même temps à la fixation de l'alésage de boîtier (22) soient matricées de manière exactement centrée.

6. Dispositif selon l'une des revendications 3 à 5, caractérisé en ce que dans les parties de surface de l'anneau de découplage (21) cylindriques, dirigées dans la direction axiale, il y a des trous oblongs (25) (matricés) dont la largeur, le nombre et le rapport par rapport à la largeur des parties résiduelles sont principalement déterminés par le degré de découplage du stator.

7. Dispositif selon l'une des revendications 1 à 6, caractérisé en ce qu'au moins l'une des deux parties d'anneau de découplage (21a, 21b) formant l'anneau de découplage (21) prend la forme appropriée des lamelles d'extrémité (28) respectives du paquet du stator.

8. Dispositif de fixation du stator (20') d'une machine électrique, notamment d'un alternateur à courant alternatif pour véhicules ou analogues, le stator (20') étant logé des deux côtés dans des parties de boîtier (panneau de palier A, 31, panneau de palier B, 32) qui sont prévues uniquement sur un angle périphérique prédéterminé avec une distance radiale (33) entre le paquet de stator (20') et les deux parties de boîtier (31, 32) de chaque côté formant des structures de découplage (20), caractérisé en ce que pour réduire le bruit et centrer le positionnement, les structures de découplage sont constituées par un anneau radial (29) prévu à la périphérie extérieure du paquet du stator (culasse de stator 20'), cet anneau radial étant relié solidement à la surface annulaire de la culasse de stator (20') par des segments de fixation (C) répartis à sa périphérie et en ce que dans l'intervalle on a des segments de couplage (B) et des segments de serrage (A) formés par des zones transitoires, à une certaine distance de la surface de la culasse de stator (20'), suivant une disposition continue, et des segments de serrage (A) servant au serrage des surfaces frontales des parties de boîtier (panneau de palier A, 31, panneau de palier B, 32) appliquées de part et d'autre.

9. Dispositif selon la revendication 8, caractérisé en ce que de chaque côté de segment de serrage (A) appartenant à l'anneau radial (29) on a également à une certaine distance par rapport à la surface de la culasse de stator, des segments de couplage (B) qui sont reliés à des segments de fixation (C) solidaires de la surface de la culasse de stator.

10. Dispositif selon la revendication 8 ou 9, caractérisé en ce que des segments de serrage, de couplage et de fixation (A, B, C) de l'anneau radial (29) sont répartis suivant une succession régulière à la périphérie de la culasse de stator (20').

11. Dispositif selon la revendication 10, caractérisé en ce que l'anneau radial (29) comprend au moins trois segments de fixation (C) répartis sensiblement à intervalles réguliers à la périphérie de la culasse de stator, ces segments étant reliés à la surface du paquet du stator par soudure, par des soudures par points ou des rivets ou analogues et en ce que les segments de serrage (A) qui s'ouvrent sur un angle périphérique important, présentent par rapport à la longueur du fer du paquet du stator, une longueur de serrage (35) plus grande de façon que la culasse de stator (20') soit maintenue uniquement par les segments de serrage (A) par serrage sur les deux faces des panneaux de palier (A et B 31, 32) du boîtier de l'alternateur à courant triphasé.

12. Dispositif selon la revendication 11, caractérisé en ce que les segments de serrage (A) comportent des déformations (37) dirigées vers l'extérieur avec des orifices de passage (38) pour des moyens de serrage (tirants, vis de serrage) pour les panneaux de boîtier appliqués sur les deux faces.

13. Dispositif selon l'une des revendications 8 à 12, caractérisé en ce que l'anneau radial (29) est formé dans la zone voisine de la périphérie des lamelles du stator par une alternance de segments de serrage, de couplage et de fixation (A, B, C) pour former des fentes (39) et les segments de fixation (C) faisant corps avec les lamelles du stator, adjacentes et en ce que le serrage n'est réalisé que dans la zone des segments de serrage (A) par les panneaux de palier de boîtier (31', 32') des deux côtés, par des cavités (40) réalisées des deux côtés du boîtier, chaque fois de manière adjacente à chaque segment de serrage (A).

14. Dispositif selon l'une des revendications 1-14, caractérisé en ce que dans les intervalles, cavités, surfaces annulaires (26, 33, 39, 40, 27) entre les anneaux de découplage respectifs et la culasse de stator ou les parties de boîtier, on introduit une masse d'étanchéité ou d'amortissement (caoutchouc au silicone, viton).

**10**

# Fig.1

# Fig.3

# Fig.2

# Fig.4

12

**Fig.5**

**Fig.6**

## Fig.7

## Fig.8